# EUROPÄISCHE PATENTANMELDUNG

(11) **EP 1 106 224 A2**
(43) Veröffentlichungstag der Anmeldung: **13.06.2001**
(21) Anmeldenummer: 00125598.3
(22) Anmeldetag: 22.11.2000
(51) Int. Cl.: B01D 21/04, B01D 21/28, B01D 21/24, B01D 21/08, B01D 21/34

(54) **Lamellenklärer**

(30) Priorität: 30.11.1999 DE 19957570
(71) Anmelder: LINDE-KCA-Dresden GmbH, 01277 Dresden (DE)
(72) Erfinder: Pankow, Steffen, Dr. Dipl.-Ing., 01099 Dresden (DE); Hetze, Ingolf, Dipl.-Ing., 01279 Dresden (DE); Baumann, Torsten, Dipl.-Ing., 01277 Dresden (DE); Gärtner, Peter, Dipl.-Ing., 01257 Dresden (DE)
(74) Vertreter: Kasseckert, Rainer

(57) **Zusammenfassung**

Die Erfindung betrifft einen Lamellenklärer zur Klärung von feststoffhaltigen Flüssigkeiten, z.B. Abwasser oder Oberflächenwasser. Um eine wirtschaftliche Betriebsweise des Lamellenklärers zur gewährleisten wird vorgeschlagen, daß oberhalb der Lamellen (9) eine verfahrbare Brücke (10) angeordnet ist, die zielgenau über jeder Lamelle (9) und/oder jedem Lamellenzwischenraum positionierbar ist. Bevorzugt ist die Brücke (10) begehbar ausgeführt, und es ist ein Reinigungsgerät befestigbar. Außerdem ist vorzugsweise eine Schlammabzugseinrichtung (11) an der Brücke (10) befestigt, die mit einem externen Schlammsammelraum (4) in Verbindung steht. Auf diese Weise wird eine kompakte Bauweise des Lamellenklärers ermöglicht, und es kann der Lamellenklärer auf einfache Weise inspiziert und gereinigt werden.

## Beschreibung

Die Erfindung betrifft einen Lamellenklärer zur Klärung von feststoffhaltigen Flüssigkeiten.

Lamellenklärer, die in der Literatur häufig auch als Schrägklärer, Schrägplattenabscheider, Schnellklärer oder Kompaktabsetzer bezeichnet werden, sind regelmäßig zur Wasseraufbereitung benutzte Apparate, die sich durch einen hohen Volumenstrom bei relativ geringer Grundfläche auszeichnen. Problematisch ist bei derartigen Apparaten, daß sie immer wieder gereinigt werden müssen. Bei den meisten Ausführungsformen ist es hierzu notwendig, die Flüssigkeit aus dem Lamellenklärer abzulassen, damit die Lamellen zu Reinigungsarbeiten zugänglich sind. Die Reinigung selbst erfolgt dann häufig mit Bürsten, ggf. durch Hochdruckreiniger unterstützt.

Es sind auch schon Lamellenklärer vorgeschlagen worden, bei denen eine automatische Reinigung vorgesehen ist.

Beispielsweise weist die aus der DE 28 09 068 bekannte Einrichtung schräggestellte bewegliche Absetzflächen auf, wobei der Schlamm durch Klopfen oder Rollen der Absetzflächen abgeschüttelt werden soll.

Bei der in der DE 24 32 937 beschriebenen Vorrichtung wird ein Vibrator eingesetzt, der die Trennflächen in Schwingung versetzt und dazu führen soll, daß der Schlamm abgerüttelt wird.

Eine andere Lösung ist in der DE 41 30 515 beschrieben, die beispielsweise als Schwammbällchen ausgebildete Reinigungselemente vorschlägt, welche z.B. mittels Druckluft in die Zwischenspalte der Lamellen gedrückt werden und so den abgesetzten oder aufgewachsenen Belag abschaben sollen.

Insgesamt sind die bisher bekannten Lamellenklärer nur mit großem technischen Aufwand zu reinigen und erlauben keine ausreichend wirtschaftliche Betriebsweise.

Der vorliegenden Erfindung liegt daher die Aufgabe zugrunde, einen Lamellenklärer zur Verfügung zu stellen, der einen wirtschaftlichen Betrieb ermöglicht.

Diese Aufgabe wird erfindungsgemäß dadurch gelöst, daß oberhalb der Lamellen eine verfahrbare Brücke angeordnet ist, die zielgenau über jeder Lamelle und/oder jedem Lamellenzwischenraum positionierbar ist.

Lamellenklärer erfordern ein Mindestmaß an Überwachung, um zu gewährleisten, daß durch eine gleichmäßige Durchströmung optimale Klärleistungen erzielt werden. In regelmäßigen Abständen ist auch eine gründliche Inspektion bzw. Reinigung notwendig. Feste Zugangsbühnen sind dabei insofern ungeeignet, als entweder die Zugänglichkeit zu den Lamellen nicht gegeben ist, oder die Zugangsbühne die Lamellen abdeckt. Sehr schwer zu erfüllen sind in diesem Zusammenhang insbesondere die jeweiligen Arbeitsschutz-Vorschriften, die eine Absicherung gegen Hineinstürzen bei leerem Becken fordern. Besonders diesen Forderungen wird die verfahrbare Brücke auf sehr kostengünstige Weise gerecht.

Mit der erfindungsgemäßen Lösung kann jede einzelne Lamelle von oben her gereinigt werden. Hierzu ist die verfahrbare Brücke bevorzugt begehbar ausgeführt. Dadurch kann Reinigungspersonal gezielt zu den mit Schlamm versetzten Lamellen gelangen. Es ist aber auch möglich, Reinigungsgeräte über die verfahrbare Brücke zielgenau zu jeder Lamelle zu bringen. Zu diesem Zweck kann die verfahrbare Brücke z.B. eine Schiene aufweisen, an der das Reinigungsgerät entlanggeführt werden kann. Gemäß einer besonders bevorzugten Ausführungsform ist das Reinigungsgerät an der verfahrbaren Brücke befestigbar.

Die verfahrbare Brücke kann mittels Positionssensor so ausgeführt werden, daß eine Positionierung an jeder gewünschten Stelle, d.h. über jedem Zwischenraum der Lamellen erfolgen kann. Da die Brücke vorzugsweise parallel zu den Einzelplatten ausgerichtet ist, ist ein gezieltes Abreinigen jedes Lamellenzwischenraumes möglich. Das Reinigungsgerät wird dabei zweckmäßigerweise mittels Programm vorgewählt. Darüber hinaus ist es möglich, das Reinigungsgerät parallel zu verschieben (manuell oder automatisch) und für mehrere Lamellenpakete zu nutzen.

In Weiterbildung des Erfindungsgedankens ist an der Brücke eine Schlammabsaugeinrichtung befestigt, die eine Saugleitung zum Absaugen von Schlamm aufweist. Die Schlammabsaugeinrichtung ist bevorzugt mit einer Räumeinrichtung zum Zusammenschieben von Schlamm ausgestattet. Diese Räumeinrichtung kann beispielsweise als seitlich angeordnete Krähl- oder Pflugstäbe ausgebildet sein, die den seitlich lagernden Schlamm, der beispielsweise in der Mitte angeordneten Saugleitung zuführen.

Aufgrund der kompakten Bauweise von Lamellenklärern im Vergleich zu konventionellen Klärbecken sind die auszurüstenden Klärbecken relativ kurz. Daher ist es möglich und sinnvoll, für den Schlammabzug einen flexiblen Schlauch zu verwenden, der unterhalb der Wasseroberfläche im Bereich des Einströmkanals geführt wird. Damit ist auch bei Außenaufstellung keine Vereisungsgefahr gegeben, ohne daß zusätzliche Maßnahmen (wie z.B. Beheizung oder ähnliches) notwendig sind.

Die Saugleitung ist zweckmäßigerweise so ausgeführt, daß die Befestigung an der Brücke oberhalb des Wasserspiegels erfolgt und eine Demontage während des laufenden Betriebs ohne Außerbetriebnahme der Gesamtanlage erfolgen kann. Die Saugleitung ist zweckmäßigerweise aus einem flexiblen Saugrüssel, der bis zum Boden des Klärbeckens reicht, und einem Abzugschlauch, der mit dem Schlammsammelraum in Verbindung steht, zusammengesetzt. Saugrüssel und Abzugschlauch sind zweckmäßigerweise über eine gelenkig gelagerte Kupplung verbunden.

Besonders bevorzugt steht die Saugleitung mit einem externen Schlammsammelraum in Verbindung. Der Schlammsammelraum weist zweckmäßigerweise Mittel zum Eindicken von Klärschlamm auf, die z.B. als Krählwerk oder Vibrator ausgebildet sein können. Im Hinblick auf eine möglichst hohe Schlammeindickung müßte der Lamellenklärer eigentlich mit einem möglichst tiefen Becken ausgestattet sein, so daß bei genügend langer Aufenthaltszeit in Verbindung mit dem relativ hohen Wasserdruck entsprechend hohe Trockensubstanzgehalte im Schlamm erreicht werden könnten. Allerdings ist dieser verfahrenstechnische Vorteil mit erhöhten Bauvolumina zu erkaufen. Daher wird ein externer Schlammsammelraum vorgeschlagen, der eine kompakte Bauweise des Lamellenklärers ermöglicht.

Gemäß einer besonders bevorzugten Ausgestaltung der Erfindung weist der Schlammsammelraum in der Höhe einstellbare Überläufe auf. Durch Einstellung der Überfallhöhe ist es auf sehr einfache Weise möglich, den Saug-Volumenstrom entsprechend den jeweiligen Gegebenheiten einzustellen. Größere Wasserspiegeldifferenzen bedingen einen höheren Volumenstrom und umgekehrt.

Durch die anlagentechnische Trennung von Schlammeindickung und Schlammabzüg unter den Lamellen ist es auch möglich, mittels höherer Schlammrückführung die Strömungsverhältnisse unterhalb der Lamellenpakete so zu stabilisieren, daß auch Abwässer mit ungünstigeren Absetzeigenschaften (z.B. größere Flocken mit Gefahr der Faserbildung) in Lamellenklärem behandelt werden können. Der Schlammsammelbehälter kann in Abhängigkeit von der jeweiligen Einbausituation so angeordnet werden, daß seine Behältersohle möglichst tief liegt. Da dieser Behälter konstruktiv vom eigentlichen Klärer getrennt ist, kann z.B. eine separate Gründung vorgenommen werden.

Die konstruktive Ausbildung des Schlammsammelbehälters ist vorzugsweise so gewählt, daß in erster Linie die schwereren Feststoffflocken abgeschieden werden. Damit ist die Voraussetzung für einen gut eindickbaren Schlamm gegeben. Der optimal eingedickte Schlamm wird zweckmäßigerweise diskontinuierlich entnommen und entsorgt (z.B. maschinelle Entwässerung).

Leichtere bzw. kleinere Flocken fließen über den Überlauf ab und können als Keime für das Kontaktschlammverfahren rückgeführt werden. Aufgrund der sich ergebenden Höhenverhältnisse sind nur sehr geringe Höhendifferenzen zu überwinden.

Das Lamellenpaket kann konventionell aufgebaut sein, d.h. es können alle kommerziell verfügbaren Systeme genutzt werden. Die Längen sollten so gewählt werden, daß die komplett vormontierten Pakete nur in einen bauseits errichteten Grundkörper eingesetzt werden müssen. Bei größeren Längen der Pakete, die jedoch aus hydraulischen Gründen nicht empfohlen werden, sind lediglich die Unterstützungen so zu wählen, daß sie die Räumeinrichtungen nicht beeinflussen.

Die Lamellenpakete werden bevorzugt blockweise in Doppelausführung je Klärbecken angeordnet. Der Boden des Klärbeckens ist zweckmäßigerweise zur Mitte leicht geneigt (5-10%). Die Schlammabsaugeinrichtung ist vorzugsweise als sog. Saugräumer ausgebildet, d.h. daß er den Schlamm mittig über eine Saugdüse abzieht, wobei der seitlich lagernde Schlamm über seitlich angeordnete Räumeinrichtungen, z.B. Krähl- oder Pflugstäbe, ebenfalls der Saugdüse zugeführt wird.

Übliche Lamellenklärer besitzen entweder einen trichterförmigen Schlammsammelraum und/oder eine maschinelle Schlammabzugsvorrichtung, die eine spezielle Bauwerkskonstruktion fordert. Der schalungstechnische Aufwand ist teilweise beträchtlich. Die hier vorgestellte Ausführung gestattet den Einsatz ebener flächiger Elemente, die beispielsweise vorgefertigt werden können. Die Baukosten reduzieren sich daher erheblich.

Die Erfindung bietet eine ganze Reihe von Vorteilen:

Die vorgestellte Variante des Lamellenklärers führt bekannte Komponenten der Wasseraufbereitung zu einer neuartigen Gesamtlösung zusammen. Hervorzuheben sind insbesondere:
- Geringere Baukosten des Klärerbauwerks, z.B.
   - durch Einsatz vorgefertigter Bauelemente
   - durch einfache Behälterformen.
- Geringe Kosten für die Ausrüstung bei hohem Ausrüstungsstandard
   - Regulierung des Rücklauf-Verhältnisses / taktweiser Abzug
   - Überwachung der Schlammkonzentration
   - Einstellbarkeit des Eindickungsgrades des Überschußschlammes
- Einfache Bedienbarkeit
   - Gute Zugänglichkeit für Wartungsarbeiten
   - Möglichkeit der automatischen Reinigung der Lamellen
   - Reparatur und Instandhaltung bei laufendem Betrieb, keine beweglichen Teile unter Wasser.

Das vorgestellte Konzept erweitert damit die Einsatzmöglichkeiten von Schräg- bzw. Lamellenklärern erheblich und gestattet den Einsatz auch dort, wo verfahrenstechnische Zwänge oder die Notwendigkeit einer aufwendigen manuellen Reinigung eine Anwendung bisher ausschlossen. Die Erfindung eignet sich sowohl zur Frischwasseraufbereitung aus Oberflächenwässern als auch zur Abwasserbehandlung bei Systemen mit beengtem Platzangebot. Insgesamt kann die Erfindung zur Klärung aller denkbaren feststoffhaltigen Flüssigkeiten verwendet werden.

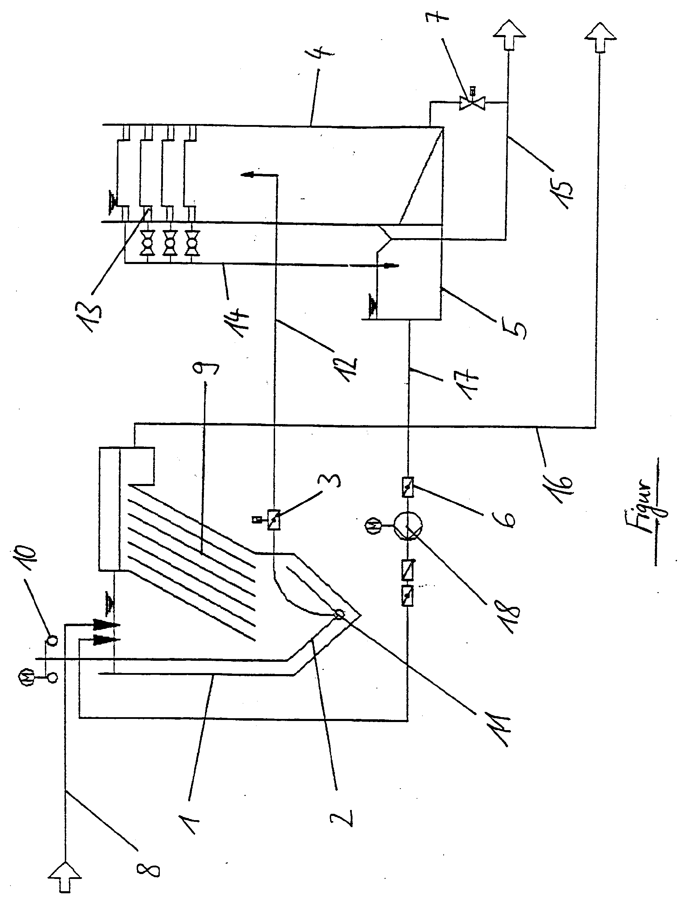

Im folgenden soll die Erfindung anhand eines in der Figur schematisch dargestellten Ausführungsbeispiels näher erläutert werden:

Die zu reinigende Flüssigkeit, im vorliegenden Fall feststoffhaltiges Abwasser, wird über einen Zulauf 8 dem Lamellenklärer 1, der schräggestellte Lamellen 9 aufweist, zugeführt. Oberhalb des Lamellenklärers 1 ist eine verfahrbare Brücke 10 angeordnet, an der ein Saugräumer 2 zum Zusammenschieben und Absaugen von Schlamm befestigt ist. Der Saugräumer 2 weist eine Saugdüse 11 auf, die über eine Saugleitung 12 und eine Pneumatikarmatur 3 mit dem Schlammsammelraum 4 in Verbindung steht. Der Schlammsammelraum 4 besitzt in der Höhe verstellbare Überläufe 13, mit denen der Saug-Volumenstrom entsprechend den jeweiligen Gegebenheiten eingestellt werden kann. Größere Wasserspiegeldifferenzen zwischen der Flüssigkeit im Lamellenklärer 1 und der Flüssigkeit und/oder dem Schlamm im Schlammsammelraum 4 bedingen einen höheren Volumenstrom und umgekehrt. Überlaufender Schlamm und/oder Flüssigkeit wird über Leitung 14 einer Pumpenvorlage 5 zugeführt. Eingedickter Schlamm wird über ein Ventil 7 und eine Schlammabzugsleitung 15 abgezogen. Mittels einer Rückführleitung 17 wird Flüssigkeit über eine Pneumatikarmatur 6 und eine Rücklaufpumpe 18 zum Lamellenklärer 1 zurückgeführt. Geklärte Flüssigkeit wird über Leitung 16 vom Lamellenklärer 1 abgezogen.

## Patentansprüche

1. Lamellenklärer zur Klärung von feststoffhaltigen Flüssigkeiten, **dadurch gekennzeichnet**, daß oberhalb der Lamellen (9) eine verfahrbare Brücke (10) angeordnet ist, die zielgenau über jeder Lamelle (9) und/oder jedem Lamellenzwischenraum positionierbar ist.

2. Lamellenklärer nach Anspruch 1, **dadurch gekennzeichnet**, daß die Brücke (10) begehbar ist.

3. Lamellenklärer nach Anspruch 1 oder 2, **dadurch gekennzeichnet**, daß an der Brücke (10) ein Reinigungsgerät zur Reinigung der Lamellen (9) befestigbar ist.

4. Lamellenklärer nach einem der Ansprüche 1 bis 3, **dadurch gekennzeichnet**, daß an der Brücke (10) eine Schlammabsaugeinrichtung (11) befestigt ist, die eine Saugleitung (12) zum Absaugen von Schlamm aufweist.

5. Lamellenklärer nach Anspruch 4, **dadurch gekennzeichnet**, daß die Schlammabsaugeinrichtung (11) mindestens eine Räumeinrichtung (2) zum Zusammenschieben von Schlamm aufweist.

6. Lamellenklärer nach Anspruch 4 oder 5, **dadurch gekennzeichnet**, daß die Saugleitung (12) mit einem externen Schlammsammelraum (4) in Verbindung steht.

7. Lamellenklärer nach Anspruch 6, **dadurch gekennzeichnet**, daß der Schlammsammelraum (4) Mittel zum Eindicken von Klärschlamm aufweist.

8. Lamellenklärer nach Anspruch 6 oder 7, **dadurch gekennzeichnet**, daß der Schlammsammelraum (4) in der Höhe einstellbare Überläufe (13) aufweist.
